# EUROPÄISCHE PATENTSCHRIFT

(11) **EP 1 352 359 B1**
(45) Veröffentlichungstag und Bekanntmachung des Hinweises auf die Patenterteilung: **28.09.2005**
(21) Anmeldenummer: 02710788.7
(22) Anmeldetag: 10.01.2002
(51) Int. Cl.: G06K 11/18

(54) **SCHNITTSTELLE ZUR ERZEUGUNG VON PROZESS- UND KOORDINATIONSEINGABEN**
INTERFACE FOR GENERATING PROCESS AND CO-ORDINATION INPUTS
INTERFACE POUR GENERER DES ENTREES DE PROCESSUS ET DE COORDINATION

(30) Priorität: 10.01.2001 DE 10100845
(43) Veröffentlichungstag der Anmeldung: 15.10.2003
(73) Patentinhaber: Landfried, Stefan, 93351 Painten (DE)
(72) Erfinder: Landfried, Stefan, 93351 Painten (DE)
(74) Vertreter: Pfenning, Meinig & Partner GbR
(86) Internationale Anmeldenummer: PCT/EP2002/000169
(87) Internationale Veröffentlichungsnummer: WO 2002/056244

(56) Entgegenhaltungen:
- EP-A- 0 794 482
- WO-A-00/24185
- WO-A-02/01491
- WO-A-97/48066
- WO-A-99/30311
- DE-U- 29 918 265
- GB-A- 2 343 867
- US-A- 5 633 658
- US-A- 5 729 251
- "MULTI-CASING COMPUTER POINTING DEVICES" RESEARCH DISCLOSURE, KENNETH MASON PUBLICATIONS, HAMPSHIRE, GB, Nr. 421, Mai 1999 (1999-05), Seite 692 XP000888757 ISSN: 0374-4353

## Beschreibung

Die vorliegende Erfindung bezieht sich auf eine Schnittstelle zur Erzeugung von Prozeß- und Koordinationseingaben wie sie herkömmlicherweise bereits in Form einer Computermaus eingesetzt wird. Derartige Schnittstellen werden zur Steuerung von Computern in sämtlichen Anwendungsbereichen eingesetzt.

Eingabetechniken nach dem Stand der Technik beruhen gewöhnlich auf Übermittlung von Wortbefehlen über eine Tastatur und/oder Positionsbefehlen mittels x-/y-/z-Koordinatenübertragung aus Eingabegeräten wie Computermäusen oder Trackballs. Diese Schnittstellen lösen bisher auch in zufriedenstellender Weise die Anforderung an die Genauigkeit der Bewegungserfassung und die Übermittlung von Prozeßkommandos. Professionelle Anwender stoßen jedoch schnell an Grenzen der Genauigkeit, Schnelligkeit der Befehlsübermittlung und Ergonomie dieser Eingabegeräte. Weiterhin ist nachteilig, daß diese Schnittstellen gewöhnlich einheitlich sind für sämtliche Arten von Anwendungen, die auf Computern laufen. Dies bedeutet, daß mit einer standardisierten Schnittstelle verschiedenste Programme, wie beispielsweise CAD-Anwendungen, Internet-Browser, Textverarbeitung und dergleichen, durchgeführt werden müssen.

Computermäuse sind im Stand der Technik allgemein bekannt. Diese weisen gewöhnlich ein zweiteiliges Gehäuse auf, in dem die Eingabe und Übertragungselektronik angeordnet ist. Die beiden Gehäuseteile sind gewöhnlich miteinander verschraubt. Die DE 299 06 631 U1 offenbart eine Computermaus, bei der die beiden Teile des Gehäuses über eine Verriegelungsvorrichtung miteinander verbunden sind. Dies macht es einfach, die beiden Teile miteinander zu verbinden und insbesondere mittels einer Schnappöffnung auch das Oberteil des Gehäuses abzunehmen, um die in der Maus befindlichen Bauteile zu warten, zu reparieren oder auszutauschen. Die Oberschale dieses Gehäuses dient dabei lediglich der Abdeckung der gesamten auf dem Unterteil des Gehäuses angeordneten Eingabe-, Auswerte- und Übermittlungselektronik.

In der Druckschrift Research Diclosure No. 421, Mai 1999, S. 692 XP000888757 "Multicasing Computer Pointing Device" wird eine aus einem Oberteil und einem Unterteil bestehende Computermaus offenbart. Das Oberteil umfaßt den Teil der Maus, der mit dem Benutzer in Kontakt steht. Das Unterteil umfaßt Drähte, die Mauskugel, Drehsensoren und Klicksensoren der Mausknöpfe. Das Oberteil kann für die verschiedenen Anwendungen variieren und mit dem Unterteil, das unabhängig von den verschiedenen Anwendungen gleichgestaltet ist, verbunden werden.

Die Druckschrift WO 99/30311 offenbart eine Maus, auf die ein prozessorbasierter Computer, der eine Tastatur, ein Display und einen Datenspeicher umfasst, aufgesetzt werden kann.

Aufgabe der vorliegenden Erfindung ist es, eine Schnittstelle zur Erzeugung von Prozeß- und Koordinationseingaben in Form einer Computermaus zur Verfügung zu stellen, die sowohl anwendungsspezifisch als auch anwenderspezifisch konfigurierbar ist.

Diese Aufgabe wird durch die Schnittstelle gemäß Patentanspruch 1 sowie die Verwendungen gemäß den Patentansprüchen 20 und 21 gelöst. Vorteilhafte Weiterbildungen der erfindungsgemäßen Schnittstelle werden in den jeweiligen abhängigen Ansprüchen gegeben.

Die erfindungsgemäße Computermaus weist wie im Stand der Technik ein zweiteiliges Gehäuse auf. Erfindungsgemäß sind nun jedoch sämtliche Elemente, die bei allen Schnittstellen invariant sind, insbesondere die Übertragungsvorrichtung, in dem Unterteil oder Basisteil der Maus angeordnet, während das Oberteil des Gehäuses eine Benutzerschnittstelle aufweist. Beide Gehäuseteile sind lösbar miteinander verbunden, wobei im Basisteil und im Oberteil des Gehäuses jeweils zueinander passend und an entsprechender Stelle angeordnet Verbindungselemente vorgesehen sind, über die zwischen dem Oberteil und dem Basisteil elektrische Signale ausgetauscht werden können. Derartige Verbindungselemente können Stecker bzw. Buchse einer elektrischen Steckverbindung sein.

Die Benutzerschnittstelle selbst kann einzelne Tasten, ganze Tastaturen, Trackballs, 3D-Sticks, Laufräder oder andere mögliche Eingabevorrichtungen aufweisen.

Vorteilhaft bei der erfindungsgemäßen Schnittstelle ist nun, daß durch einfachen Austausch des Oberteils des Gehäuses die Eingabefunktionen gewechselt werden können, während der technisch aufwendige und kostenintensive Teil der Schnittstelle als Basisteil immer dasselbe bleibt und nur einmal angeschafft werden muß. So ist diese Schnittstelle in kürzester Zeit zwischen verschiedenen Anwendungen austauschbar. Es können beispielsweise für Textverarbeitungssysteme in herkömmlicher Weise Oberteile mit zwei oder drei Tasten verwendet werden. Für CAD-Anwendungen bieten sich Oberteile mit insgesamt 16 Tasten an, während für Spiele und dergleichen auch Positionserfassungselemente wie 3D-Sticks, Laufräder oder dergleichen in die Schnittstelle des Oberteils integriert werden können. Weiterhin ist es möglich, Oberteile des Gehäuses mit dem Basisteil zu verbinden, die an den jeweiligen Benutzer angepaßt sind. So können beispielsweise für Kinder kleinere Oberschalen gegebenenfalls mit speziellen Unterteilen verwendet werden als für Erwachsene. Dies bedeutet beispielsweise, daß der jeweilige Anwender seine auf ihn individuell zugeschnittene Oberschale mitbringt und auf die Basiseinheit beispielsweise aufsteckt. Die variabel konfigurierbare Computermaus ist damit an die verschiedenen Anwendungen und an den Kenntnisstand des Nutzers leicht anpassbar. So ist es für Anfänger bei der Verwendung eines Programmes unter Umständen ratsam, die Zahl der Tasten zu begrenzen, während professionelle Anwender mit sämtlichen Optionen und damit mit einem Oberteil mit vielen Tasten arbeiten möchten. Die erfindungsgemäße Schnittstelle ermöglicht also auf kostengünstige Weise Benutzerschnittstellen, die beliebig komplex sein können und damit prozeßspezifische Kommandos mit minimierten Leerlaufzeiten ausführbar machen.

Die Anwendungsgebiete einer derartigen Schnittstelle liegen nicht nur im privaten Bereich der Computernutzung sondern auch bei der CAD/CAM-Zeichnungserstellung, bei DTP/Kreativproduktionen, sowie grundsätzlich bei allen EDV-Einsatzgebieten, bei denen hohe Genauigkeit, hohe Effizienz, häufige Befehlsübermittlung, exakte xyz-Koordinatensteuerung, Langlebigkeit und modulare Anpassbarkeit des Eingabegeräts erforderlich ist.

Zusammenfassend läßt sich feststellen, daß der Kern der Erfindung die Trennung der Funktionseinheit Schnittstelle in das Basisteil und das Oberteil ist, wobei das Basisteil ("Base") für verschiedenste Oberteile ("Shape") als Basisstation dient, um die Signalweiterleitung an den Computer zu übernehmen.

Die Signalweiterleitung kann dabei entweder direkt an ein Computerkabel, leitungsgebunden oder auch drahtlos, wie es auch bereits aus dem Stand der Technik bekannt ist, erfolgen. Besonders vorteilhaft ist es, wenn die Schnittstelle eine Spule aufweist, mit der drahtlos die Daten an ein Digitalisiertablett ("Plate") übersandt werden können. So können auch Informationen von dem Computer über das Digitalisiertablett erhalten werden. Die Spule ist weiterhin zugleich geeignet, die Position der Schnittstelle auf dem Digitalisiertablett zu erfassen. Eine besonders günstige Variante ist folglich die Kombination der bereits am Markt erhältlichen Digitalisiertechnik mit einer Schnittstelle wie sie hier vorgeschlagen wird.

Bei einem Digitalisiertablett, wie es oben beschrieben ist, dient das Tablett als Basiseinheit zum Erfassen der Steuersignale, die von dem Basisteil der Schnittstelle bei Eingabe bzw. bei Koordinatenänderungen übermittelt werden. Das Tablett wird mittels Kabelsteckverbindungen mit einem EDV-System verbunden und liefert seinerseits für die Schnittstelle die Basis um ähnlich einem Mauspad darauf zu arbeiten. Dabei werden über elektromagnetische Gitter die Positionsdaten der Schnittstelle erfaßt und zusammen mit den Signalen der gedrückten Tasten auf dem Oberteil der Schnittstelle an das Tablett übertragen. Dieses leitet dann diese Informationen an den Computer zur weiteren Auswertung weiter.

In diesem Falle ergibt sich nicht nur ein ergonomisches Design und ein entspanntes Arbeiten sondern auch eine genaueste Positionserkennung. Durch geeignete Belegung der Tasten auf dem Oberteil der Schnittstelle, die programmspezifisch durch nachgeschaltete Software im Computer definierbar sind, ist es insbesondere möglich, in sehr kurzer Zeit Befehle und Koordinaten an das Computersystem weiterzugeben. Bei ersten Versuchen im Bereich der CAD-Zeichnungserstellung wurden Geschwindigkeitssteigerungen mit nur sehr kurzer Eingewöhnungszeit im Bereich von 100 bis 400 % erzielt.

Vorteilhafterweise kann die Schnittstelle weiterhin einen elektronischen Speicher oder einen Einschubplatz für einen mobilen elektronischen Speicher, wie beispielsweise eine Flashcard, aufweisen. In diesem Falle können innerhalb der Schnittstelle verschiedenste Informationen wie beispielsweise GUID's ("Global Unique Identifier"), Passwörter, LOGIN-Daten und dergleichen zwischengespeichert werden. Auch Daten aus dem Computer können in diesen Speicher übertragen werden, wie beispielsweise benutzerspezifische Menübelegungen und dergleichen. In diesem Falle kann die Maus als Zwischenspeicher dienen, den der Benutzer von einem Computer zum anderen mitnimmt. Dies hat den Vorteil, daß dann der Benutzer auf jedem Computer sofort seine eigene Menübelegung zur Verfügung hat. Weiterhin braucht er sich die Paßwörter und LOGIN-Daten nicht weiter zu notieren, da er diese mit seiner Schnittstelle immer dabei hat. So kann die erfindungsgemäße Schnittstelle also auch zur Zugangssteuerung zu Computern, bestimmter Software oder beispielsweise zum Internet dienen. Geeigneterweise erkennt die Schnittstelle auch die Benutzersoftware und verwendet dann die zugehörige Menübelegung ihrer Eingabemittel passend zu der Software.

Die Schnittstelle kann auch so ausgestaltet werden, daß nur bei Anwesenheit der Schnittstelle der Zugang auf einen Computer möglich ist. In diesem Falle kann der Benutzer seine Computermaus immer bei sich tragen, so daß in seiner Abwesenheit der Zugang zu seinem Computer nicht mehr möglich ist. Das Tablett ("Platte") erkennt dabei An- und Abwesenheit der Computermaus und schaltet automatisch das Computersystem auf Sperrbetrieb oder gibt es bei Auflegen der eindeutig definierten Computermaus wieder frei.

Weiterhin kann in einem derartigen Speicher eine Linkverwaltung für den Zugang zum Internet abgespeichert werden. Um die Maus weiter zu personalisieren ist es auch möglich, einen Speicher oder eine Schnittstelle für einen Speicher, beispielsweise einen Speichereinschub vorzusehen, von denen Musikdateien in komprimierter Form vom Nutzer austauschbar abspielbar und speicherbar sind. Hierzu kann dem Benutzer ein spezifisches Oberteil (Shape) zur Verfügung gestellt werden, auf dem zusätzlich ein Display mit Steuereinheiten, wie Tasten, Rasten, Reglern und dergleichen zur Steuerung des Speicherns oder Abspielens der Musikdateien vorgesehen sind. Auch einen Anschluß für Stereokopfhörer ist dann im Basisteil der Computermaus vorgesehen.

Damit wird dem Nutzer ein Audiosystem, beispielsweise ein MP3-Spieler, zur Verfügung gestellt, der neben der normalen Mausbenutzung verwendet werden kann. Hierzu sind dann der Rastmechanismus zur Verrastung des Oberteils und des Basisteils der Maus und die Positionierungsfunktionalitäten als Cursor parallel zum Abspielbetrieb vorhanden.

Im Folgenden werden einige Beispiele erfindungsgemäßer Schnittstellen beschrieben werden.

Es zeigen
- Fign. 1 bis 4: herkömmliche Digitalisiertablette;
- Fig. 5: ein Unterteil einer erfindungsgemäßen Schnittstelle;
- Fign. 6 bis 10: verschiedene Oberteile erfindungsgemäßer Schnittstellen;
- Fig. 11: ein weiteres Unterteil einer erfindungsgemäßen Schnittstelle;
- Fig. 12: das zu Fig. 11 gehörige Oberteil;
- Fig. 13: ein Digitalisiertablett mit einer erfindungsgemäßen Schnittstelle;
- Fig. 14 bis Fig. 17: Verfahrensabläufe zum Betrieb der erfindungsgemäßen Schnittstelle; sowie
- Fig. 18 und Fig. 19: ein Digitalisiertablett sowie eine hierzu passende Schnittstelle.

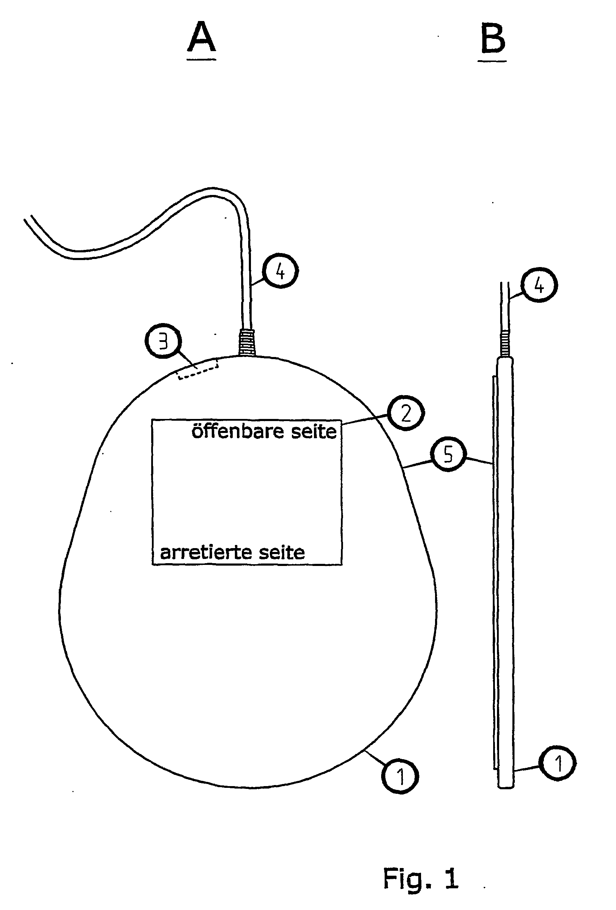

Fig. 1 zeigt ein herkömmliches Digitalisiertablett 1 ("Plate") mit einem Zeigebereich 2. Dieses Digitalisiertablett 1 weist eine Verbindungsbuchse ("AUX") zum Anbinden von externen Zusatzgeräten an seiner Frontseite auf, um weitere Zusatzprodukte an das System anzubinden, die wie das Basisunterteil digitale und analoge Signale liefern, um sie an das PC-System weiterzuleiten. Der sensitive Bereich 2 wird geschützt und gekennzeichnet durch eine flexible und durchsichtige Kunststofffolie, um dem Benutzer das Einlegen von Kleinvorlagen zu erlauben. Dieser Empfangskern kann so ausgeführt sein, dass er als Ganzes entfernt werden kann, um Wartungsarbeiten vorzunehmen oder Vorlagen einzulegen. In diesem Falle kann die flexible Kunststofffolie ersetzt werden durch ein starres Sichtfenster, das im Gehäuse des Digitalissiertabletts fest montiert ist.

Die Verbindung zum PC-System wird über eine hochflexible Kuriststoffleitung 4 mit Knickschutz realisiert. Es kann sich dabei um eine serielle, eine USB-Steckverbindung oder andere Schnittstelle zum Computer handeln.

Weiterhin enthält dieses Digitalisiertablett eine Auswerteelektronik und Sende/Empfangseinheiten für die Verbindung sowohl zum PC-System als auch zum Unterteil der Computermaus. Die Datenübertragungsrate wird dabei so gewählt, dass eine Gesamtproduktreaktionszeit, d.h. eine Information an das PC-System, in weniger als 50 ms gewährleistet ist. Die Positionserkennung des Magnetgitters in dem sensitiven Bereich 2 ist größer als 2000 lpi bzw. größer 787 Zeilen pro Zentimeter.

Wie in Fig. 1A und der zugehörigen seitlichen Darstellung Fig. 1B zu erkennen ist, weist das Digitalisiertablett eine Lauffläche 5 für eine Computermaus auf, wobei jedoch nur ein geringer Teil wirklich als sensitive Fläche 2 für die Positionserkennung geeignet ist. Eine größere sensitive Fläche ist auch nicht erforderlich, wenn wie in diesem Beispiel eine Maus verwendet werden soll, deren zugehöriges Teil zur Positionserkennung an ihrer Spitze angeordnet ist.

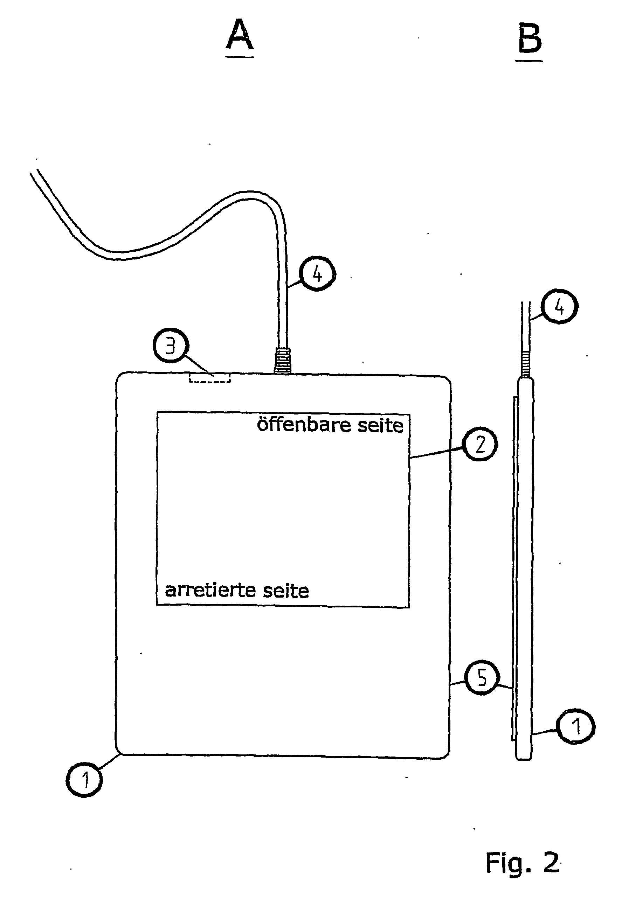

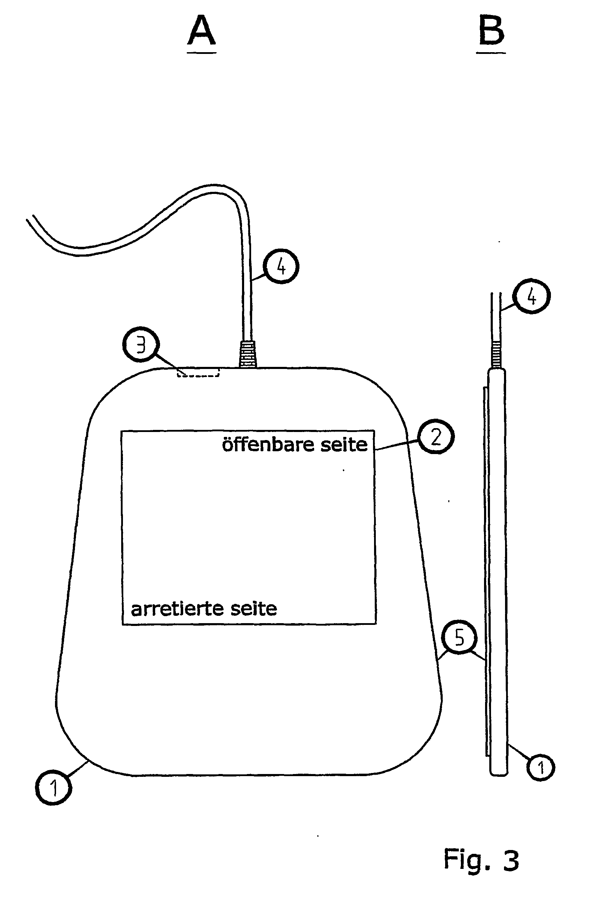

Die Fign. 2 bis 4 zeigen weitere Digitalisiertablette mit unterschiedlichen Außenformen, wie sie für unterschiedliche Mausformen verwendet werden können. Hier und im folgenden werden in sämtlichen Figuren für gleiche Elemente gleiche Bezugszeichen verwendet.

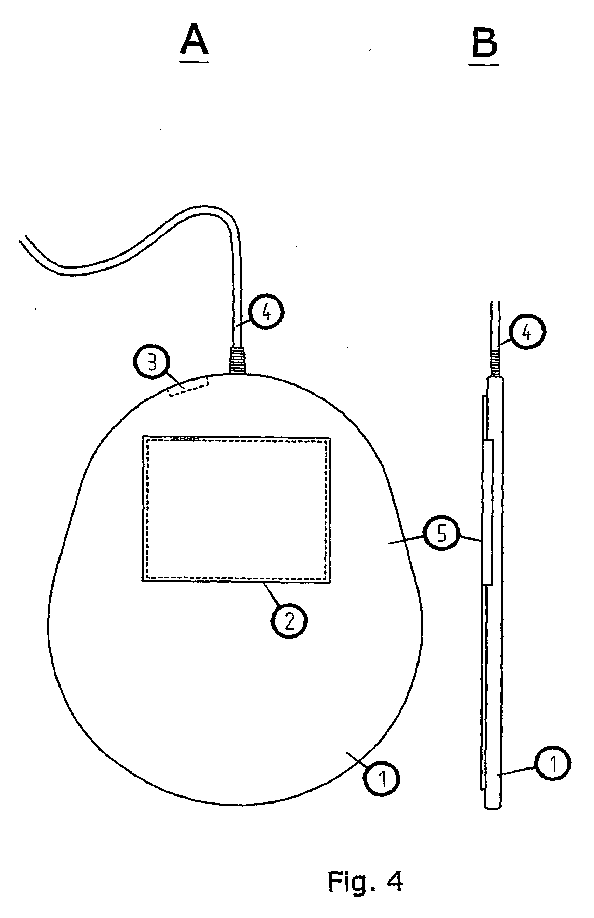

Im Falle der Fign. 1 bis 3 ist der sensitive Bereich 2 mit einer Folie belegt, die leicht vertieft angeordnet wird und bündig mit der Mauslauffläche 5 abschließt. Im Falle der Fig. 4 ist der sensitive Bereich 2 (Zeigebereich) transparent und fix montiert. Dieser Zeigebereich 2 ist als herausziehbare Technikeinheit ausgeführt, um Aufleger zu wechseln oder die Einheit selbst auszutauschen.

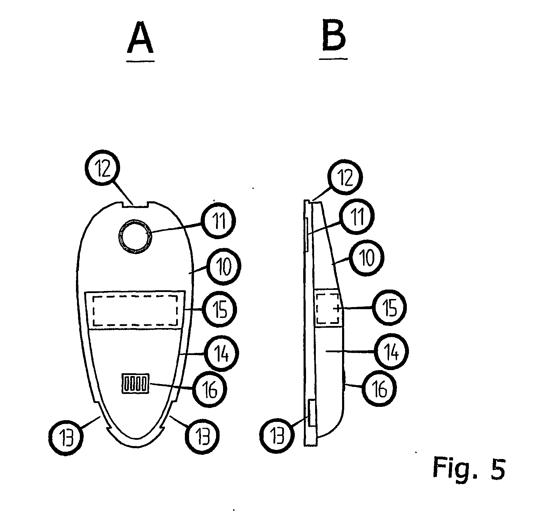

Fig. 5 zeigt ein Basisteil einer erfindungsgemäßen Schnittstelle in Form einer Computermaus. Dieses Basisteil 10 ("Base") ist in Fig. 5A in Durchsicht von oben und in Fig. 5B in seitlicher Durchsicht dargestellt. Das Basisteil 10 dient als Träger für die leicht austauschbaren Oberteile ("Shapes"). Dabei ist die Software so ausgeführt, daß der Austausch der Shapes jederzeit während des Betriebes möglich ist und über die Software des PC-Systems und über die innere Elektronik des Digitalisiertabletts bzw. des Basisteils ein Wechsel der Shapes erkannt wird.

Das Basisteil 10 beinhaltet eine Vorrichtung zur Positionserkennung 11 in Form einer elektromagnetischen Spule, welche gleichzeitig als Sende/Empfangseinheit zu dem Digitalisiertablett dient. Sie übermittelt Daten der Koordinaten bzw. der Shape-Aktionen.

Die zugehörige Elektronik 14 ist vollständig gekapselt. Sichtbar von dieser Elektronik 14 sind lediglich ein Verbindungsstecker 16 zum Shape und ein Batterie/Akkumulatorschacht 15.

Weiterhin weist diese Base 10 einen Rastmechanismus 12 sowie zwei Einklinkmechanismen 13 auf, mittels derer eine Shape sicher mit der Base 10 verrastet werden kann.

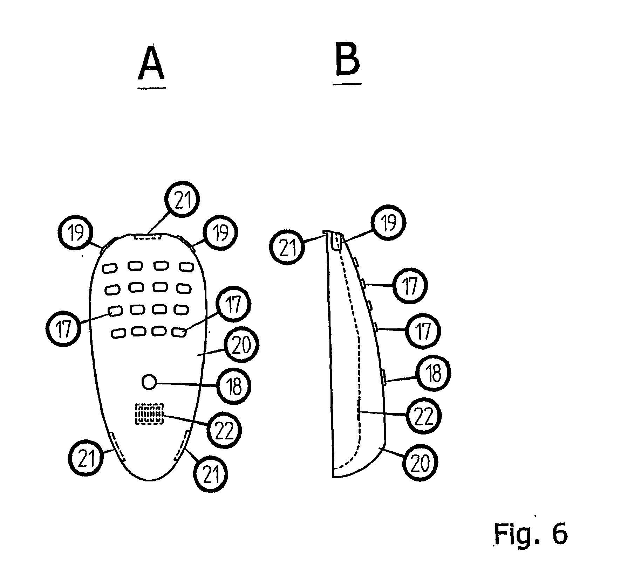

Fig. 6 zeigt nun in den beiden Teilbildern A und B jeweils eine Durchsicht von oben bzw. eine seitliche Durchsicht auf ein erfindungsgemäßes Oberteil 20 ("Shape"). Dieses Shape 20 weist insgesamt 16 Tasten 17 auf sowie einen Verbindungsstecker 22, mittels dem die von den Tasten 17 ausgelösten Signale an den Stecker 16 in der Base 10 übermittelt werden können. Weiterhin besitzt die Shape 20 seitliche Tasten bzw. Knöpfe 19 zum Eingeben von Informationen. Entsprechend den Rast- bzw. Einklinkmechanismen 12 und 13 in Fig. 5 sind an der Shape 20 entsprechende Einklinkmechanismen 21 angeordnet, die mit den Mechanismen 12 und 13 eines Basisteils 10 derart zusammenwirken, daß sie die Shape mit der Base lösbar aber sicher verbinden.

Weiterhin weist die Shape 20 einen Schnellzugriffsknopf 18 auf, der wie eine herkömmliche Tasteneingabe funktioniert, jedoch fest dem Programm zugeordnet ist, mit welchem die Computermaus konfigurierbar ist.

Mit dem Schnellzugriffsknopf 18 wird unmittelbar aus jeder Anwendung heraus das Verwaltungsprogramm der Computermaus aktiviert. Somit hat der Nutzer jederzeit die Gelegenheit einfach und schnell seine Anwendungskonfigurationen zu verändern.

Wird die Shape 20 gewechselt, so wird dies von der Hard- und Software ohne Neustart von Betriebssystem und laufenden Programmen erkannt. Basis hierfür ist u.a., daß die Eingabemittel, wie Tasten 17 in der Shape 20 über eine Auswerteelektronik mit dem Verbinder 22 verbunden sind. Diese Auswerteelektronik setzt die Eingabesignale von den Eingabemitteln, beispielsweise den Tasten 17, in logische Signale um. Diese Auswerteelektronik besteht aus einem integrierten Chip, der beispielsweise in sämtlichen Shapes wenigstens eine Mindestzahl von 20 digitalen und 6 analogen Eingabesignalen quasi parallel verarbeiten kann. Auch wenn diese Anzahl von Signalen von den Eingabemitteln nicht zur Verfügung gestellt wird, so ist mit einer einheitlichen Auswerteelektronik in sämtlichen Oberteilen dennoch die Kompatibilität sämtlicher Shapes mit den zugehörigen Basisteilen sowie den zugehörigen Übertragungsprotokollen und der Software im Computer gesichert.

Dieser Chip kann vorteilhafterweise weiterhin die Eingabesignale des Benutzers wie Tastendruck oder Laufradnutzung nicht nur auswerten sondern auch zugleich kodieren, so daß die Daten für das entsprechende Übertragungsprotokoll schon fertig aufbereitet dem Basisteil 10 zur Verfügung gestellt werden.

Fig. 6 zeigt eine Oberschale 20, die insgesamt 16 Tasten aufweist, wie sie beispielsweise für CAD/CAM-Anwendungen oder für Desktop-Publishing geeignet ist.

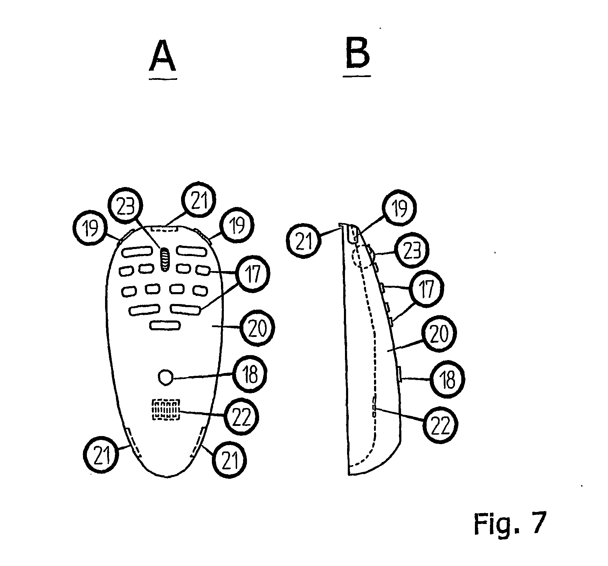

Fig. 7 zeigt eine Oberschale 20 mit insgesamt dreizehn Knöpfen 7 und zwei Seitenknöpfen 19 sowie einem Laufrad 23. Ein derartiges Aufschnappmodul 20 ist für Internetbenutzer, für Standardbenutzer sowie für Einsteiger, Schüler oder Studenten geeignet, aufgrund der verringerten Tastenzahl und dem einfachen Eingabemedium des Laufrades 23.

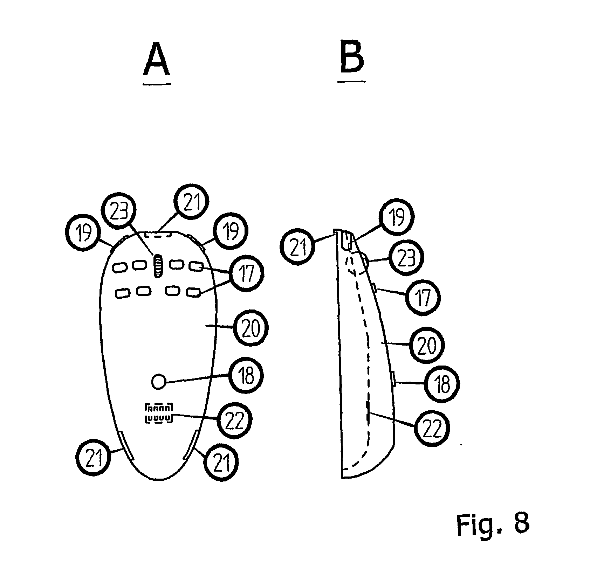

Fig. 8 zeigt eine weitere Oberschale 20, bei der lediglich acht Tasten 17, zwei Seitentasten 19 sowie ein Laufrad 23 vorgesehen sind. Dieses Aufschnappmodul 20 eignet sich für den Heimbereich, den Spielebereich sowie für gelegentliche Nutzer.

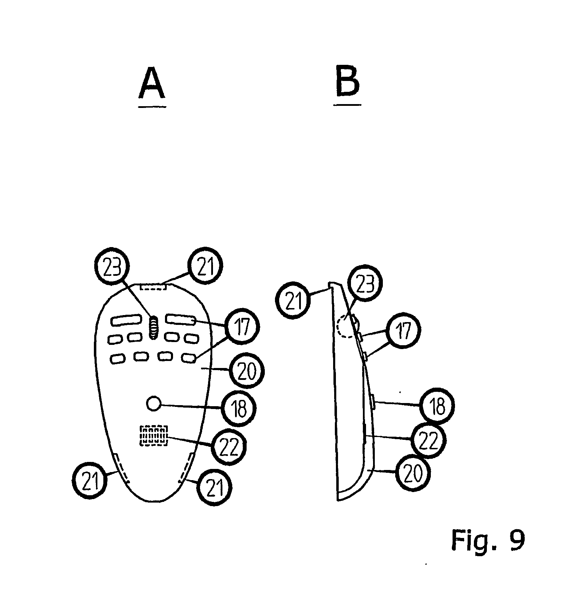

Fig. 9 zeigt ein weiteres Aufschnappmodul 20, dessen Außenform stark verkleinert ist. Es weist ebenfalls acht Tasten 17 auf, keine Seitentasten 19, jedoch ein Laufrad 23. Dieses verkleinerte Aufschnappmodul 20 ist insbesondere für Kinderhände geeignet. Erforderlichenfalls kann hierfür auch ein verkleinertes Basisteil 10 zur Verfügung gestellt werden. Dies ist jedoch nicht zwingend erforderlich.

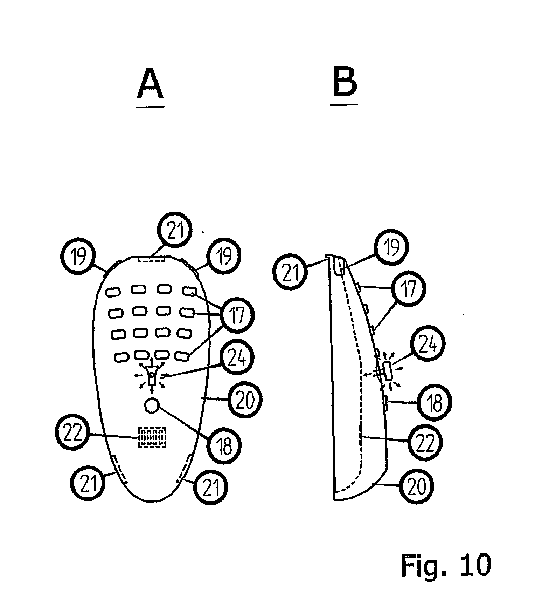

Fig. 10 zeigt ein weiteres Aufschnappmodul 20 mit insgesamt 16 Tasten 17, zwei Seitentasten 19 sowie einem Analogstick 24, mit dem sich insgesamt sechs Freiheitsgrade (drei Achsen und drei Neigungsgrade) eingeben lassen. Dieses Aufschnappmodul 20 ist geeignet für Arbeiten im 3D-Bereich.

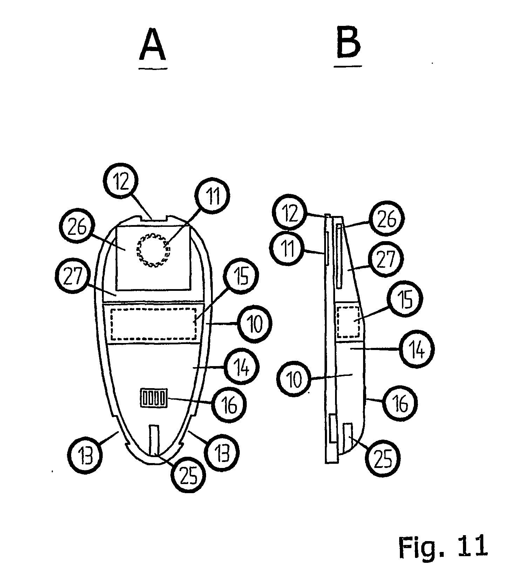

Fig. 11 zeigt eine weitere Base 10 mit einer Sende/Empfangselektronik 14, einem Batteriefach 15, einem Stecker 16 sowie den Rastvorrichtungen 12 und 13, wie sie bereits aus Fig. 5 bekannt und dort beschrieben sind. Auch eine Spule 11 ist vorgesehen zur Positionserkennung und als Sende/Empfangseinrichtung.

Zusätzlich zu dem Basisteil 10 aus Fig. 5 weist diese Base 10 einen Schacht 26 für Speicherkarten auf sowie eine Auswerteelektronik 27, um diese Speicherkarten auszulesen bzw. zu beschreiben. Weiterhin ist mit dieser Auswerteelektronik 27 eine Kopfhörerbuchse 25 verbunden, über die ein Kopfhörer an die Basis 10 angeschlossen werden kann.

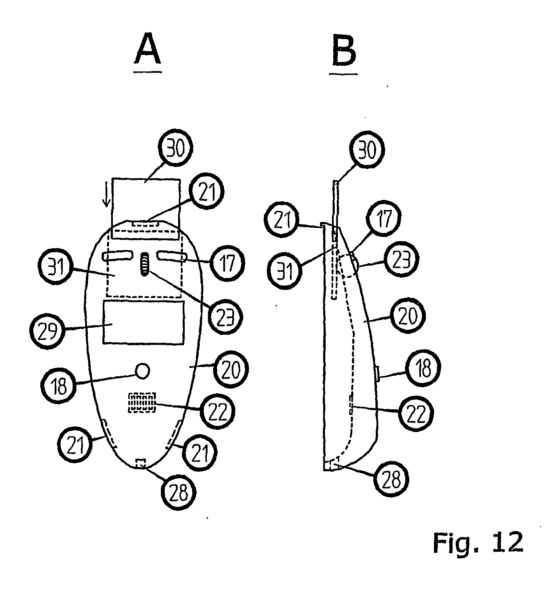

Fig. 12 zeigt die hierzu gehörige Oberschale 20, die Durchbrechungen 28 für die Kopfhörerbuchse und 31 für den Speicherkartenschacht aufweist. In dieser Darstellung ist auch eine Speicherkarte 30 dargestellt, die soeben durch die Durchbrechung 31 in den Speicherkartenschacht 26 in dem Basisteil 10 eingeschoben wird.

Das Aufschnappmodul 20 weist weiterhin auf seiner Außenseite eine Anzeigevorrichtung 29 (Display) auf sowie zwei Tasten 17 und ein Laufrad 23. Mittels dieser Eingabemittel 17 und 23 läßt sich nun die Auswerteelektronik 27 so steuern, daß die Speicherkarte 30, die sich in dem Slot 26 befindet, gelesen bzw. beschrieben werden kann. Es kann sich hierbei insbesondere um eine Speicherkarte 30 oder ein anderes Speichermedium für Audiodateien handeln. So ist es auch möglich, als Schacht 26 ein MD-, Kassetten- oder CD-Laufwerk vorzusehen. In diesem Falle kann dann über einen Kopfhörer, der an dem Kopfanhöreranschluß 25 angeschlossen ist, die Audiodatei auf dem Speichermedium 30 abgehört werden. Es handelt sich also um eine Computermaus mit integrierter Musikabspielvorrichtung, beispielsweise mit integriertem MP3-Player.

Vorteilhaft ist dabei, wenn der Rastmechanismus 19, 21 und die Positionierungsfunktionalitäten als Cursor parallel zum Abspielbetrieb vorhanden sind, so daß neben dem Abspielen der Musik weiter am Computer gearbeitet werden kann.

Die Elektronik der Basiseinheit ist derart gestaltet, daß eine direkte Übertragung von Computermaus zu Computermaus mittels der Positions- und Übertragungseinheit 11 möglich ist. Ein Datenaustausch von Maus zu Maus ist mit Steuerkommandos über das Display 29 möglich.

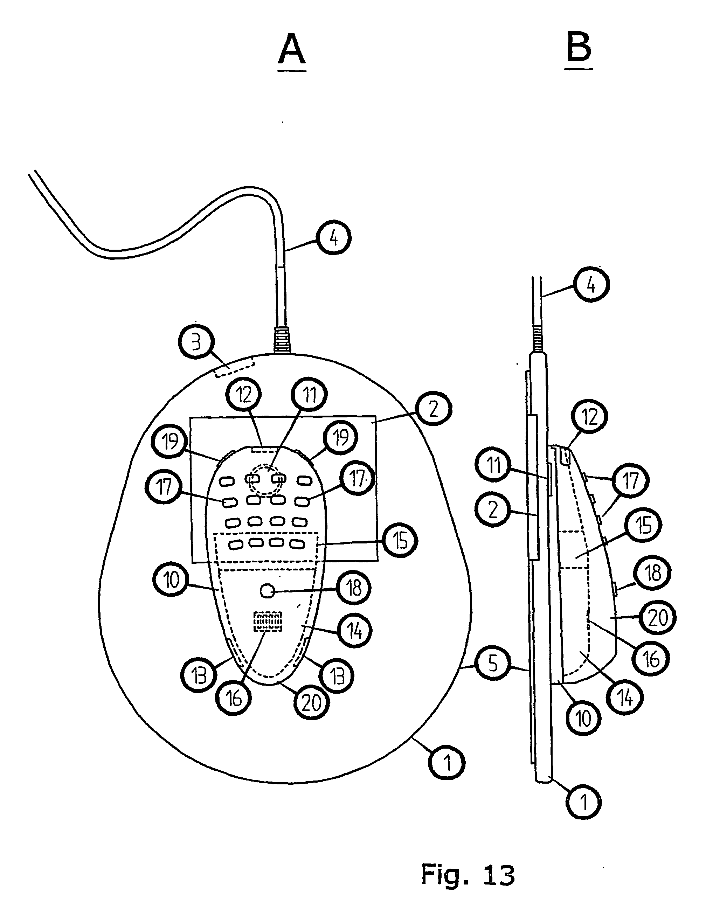

Fig. 13 zeigt ein Digitalisiertablett 1 im Zusammenwirken mit einer erfindungsgemäßen Schnittstelle bestehend aus Basisteil 10 und Oberschale 20. Dargestellt ist dabei das aus Fig. 1 bekannte Digitalisiertablett sowie die aus den Fign. 5 und 6 bekannten Basisteilen und Oberteilen. Es ist zu erkennen, daß lediglich die Spule 11 sich immer innerhalb des sensitiven Bereiches 2 aufhalten muß, um eine Positionserfassung und Datenübermittlung zu ermöglichen. Der außerhalb des sensitiven Bereiches 2 liegende Bereich des Digitalisiertabletts 1 dient lediglich der mechanischen Führung der Computermaus und als Handauflage.

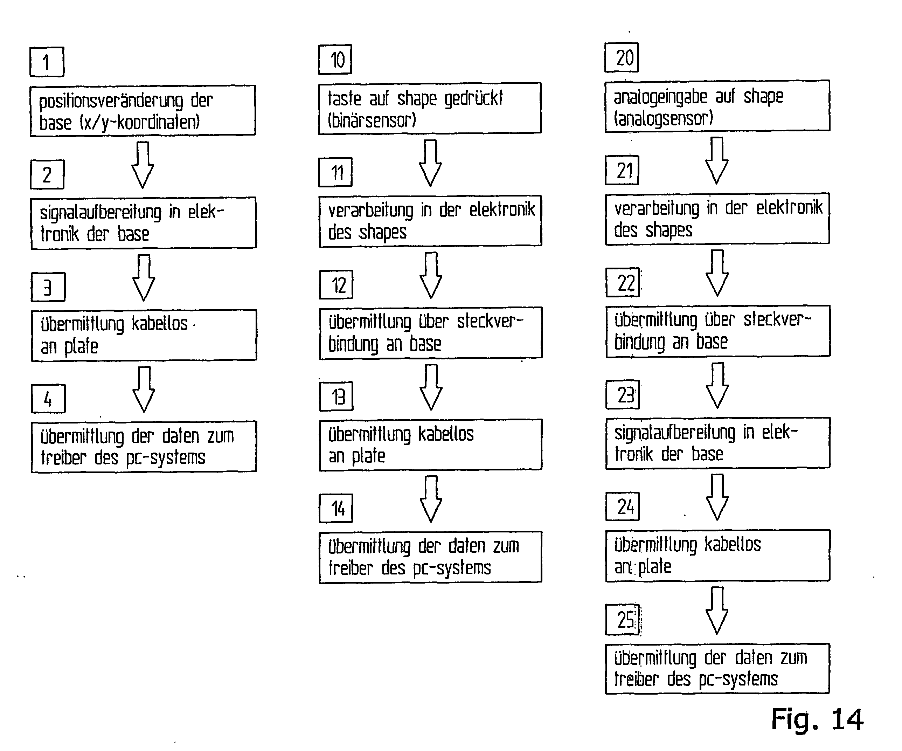

Fign. 14 bis 17 zeigen den Verlauf verschiedener Prozesse und Datenauswertungen in der Computermaus und dem Digitalisiertablett. In Fig. 14 ist dargestellt, wie eine Positionsveränderung des Basisteils, die in dem Basisteil erfaßt wird, in dem Basisteil aufbereitet und kabellos an das Digitalisiertablett übermittelt wird. Von dort werden die Daten von dem Digitalisiertablett an den Computer über die Leitung 4 übertragen.

In den Schritten 10 bis 14 ist dargestellt, wie eine Eingabe auf der Oberschale 20, beispielsweise das Drücken einer Taste, erfaßt und anschließend noch in der Oberschale 20 durch die dort vorgesehene Elektronik ausgewertet wird. Anschließend wird über die Steckverbindung 16, 22 dieses ausgewertete Signal bezüglich des Tastendrucks an das Unterteil 10 übermittelt, welches es über die Spule 11 an das Digitalisiertablett transferiert. Von dort wird wiederum die Information über den Tastendruck an den Computer übermittelt.

In den Schritten 20 bis 25 ist dargestellt, wie eine Analogeingabe, beispielsweise durch einen 3D-Stick oder ein Laufrad oder einen Trackball in dem Oberteil 20 Signale erzeugt und weitergeleitet werden. Wiederum erfolgt die Verarbeitung dieser Analogsignale unmittelbar noch in dem Oberteil 20 und wird über die Steckverbindung 16, 22 an das Unterteil 10 übermittelt. In diesem Falle erfolgt eine weitere Signalaufbereitung in dem Unterteil in Schritt 23.

Die im Oberteil 10 befindliche Auswerteeinheit vereinfacht die von den Analog- und Digitaleingabeeinheiten wie Sticks, Rollrädern und Tasten kommenden Signale und liefert an die Basiseinheit im Unterteil 20 ein definiertes Datenprotokoll, welches Art des Shapes (Shape ID), Zustände der Tasten und der analogen Eingabeeinheiten enthält.

Anschließend erfolgt eine Übermittlung an das Digitalisiertablett und das PC-System in bekannter Weise.

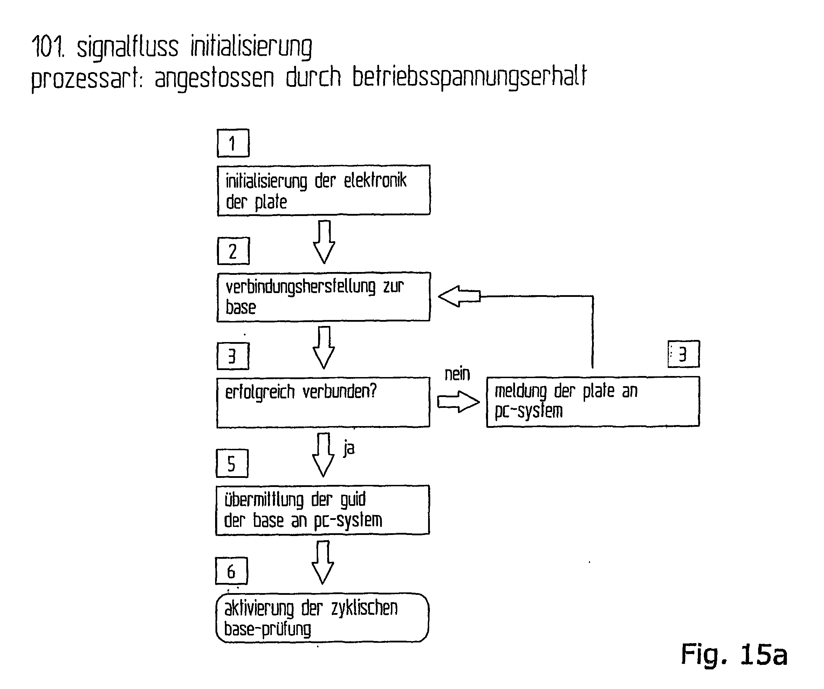

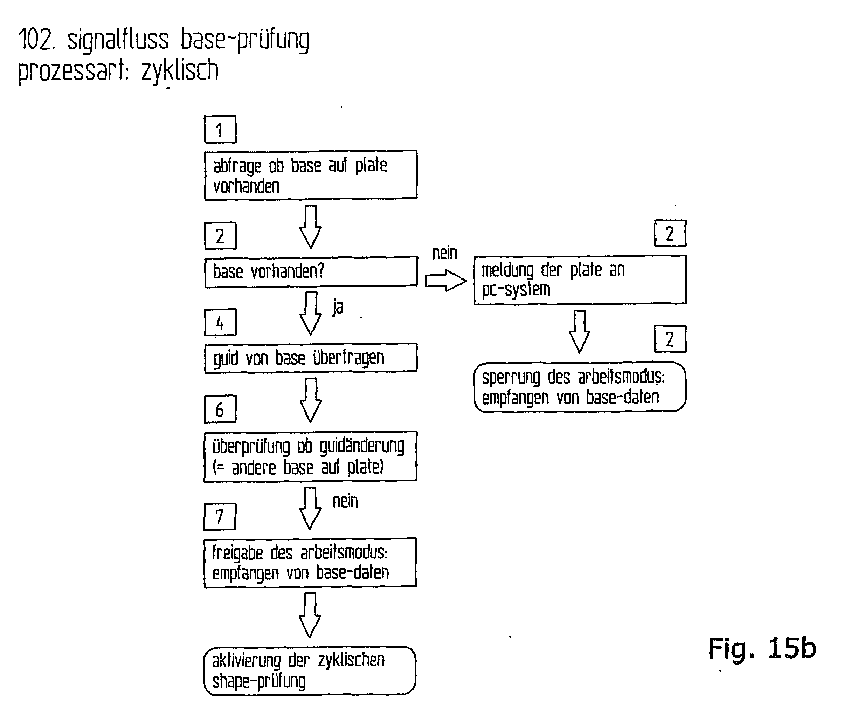

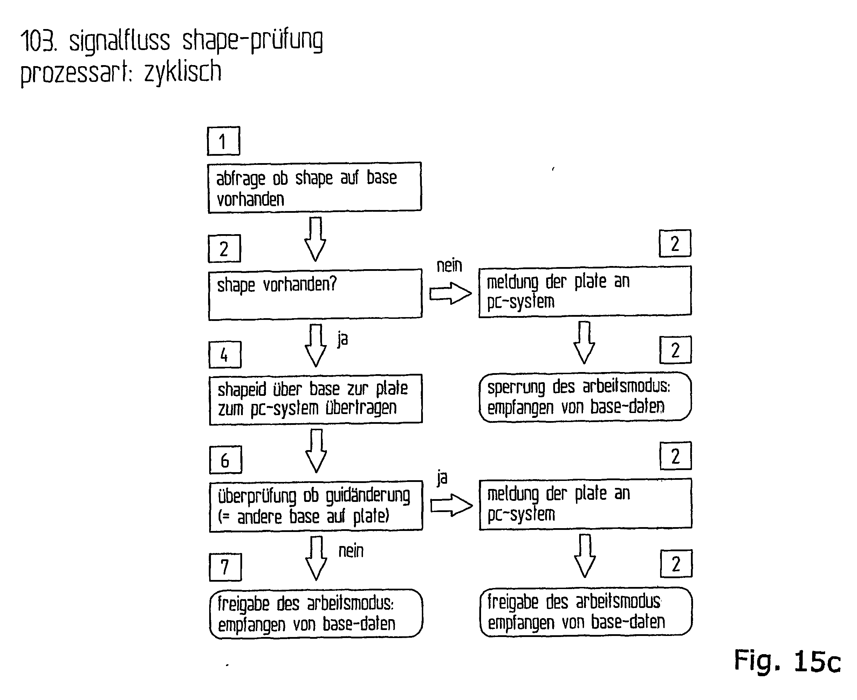

Fig. 15 zeigt den Beginn des Betriebs des erfindungsgemäßen Systems. Wird die Elektronik des Digitalisiertabletts durch Anlegen einer Spannung initialisiert, so stellt diese eine Verbindung zum Unterteil her. Nach erfolgreicher Herstellung der Verbindung zwischen Digitalisiertablett und Unterteil wird ein Global Unique Identifier (GUID) des Unterteils als Identifikation über das Digitalisiertablett an den PC gesandt. Damit beginnt der Computer eine zyklische Prüfung des Unterteils auf Anwesenheit. Diese Prüfung ist in Fig. 15 unter Punkt 102 dargestellt. Es wird also hier zyklisch gefragt, ob ein Unterteil vorhanden ist und welchen Global Unique Identifier (GUID) dieses Unterteil besitzt. Ändert sich der Global Unique Identifier, so erkennt der Computer selbsttätig, daß das Unterteil ausgetauscht wurde. So ist es beispielsweise möglich, den Computer zu sperren, wenn ein anderer Benutzer versucht auf diesen zuzugreifen und hierzu ein anderes Unterteil benutzt. So kann also das Unterteil selbst als Zugangskontrolle dienen, wobei der Einsatz des richtigen Unterteils den Zugang zum Computer ermöglicht.

In gleicher Weise kann der Computer gesperrt werden, sofern das Unterteil entfernt wird und kein Unterteil mehr vorhanden ist.

In Fig. 15 unter Punkt 103 ist dargestellt, wie das Oberteil zyklisch abgefragt wird. Auf diese Weise kann der Computer gesperrt werden, sofern auf dem Unterteil kein Oberteil vorhanden ist bzw. kann der Computer gesperrt werden, sofern ein falsches Oberteil auf dem Unterteil aufsitzt.

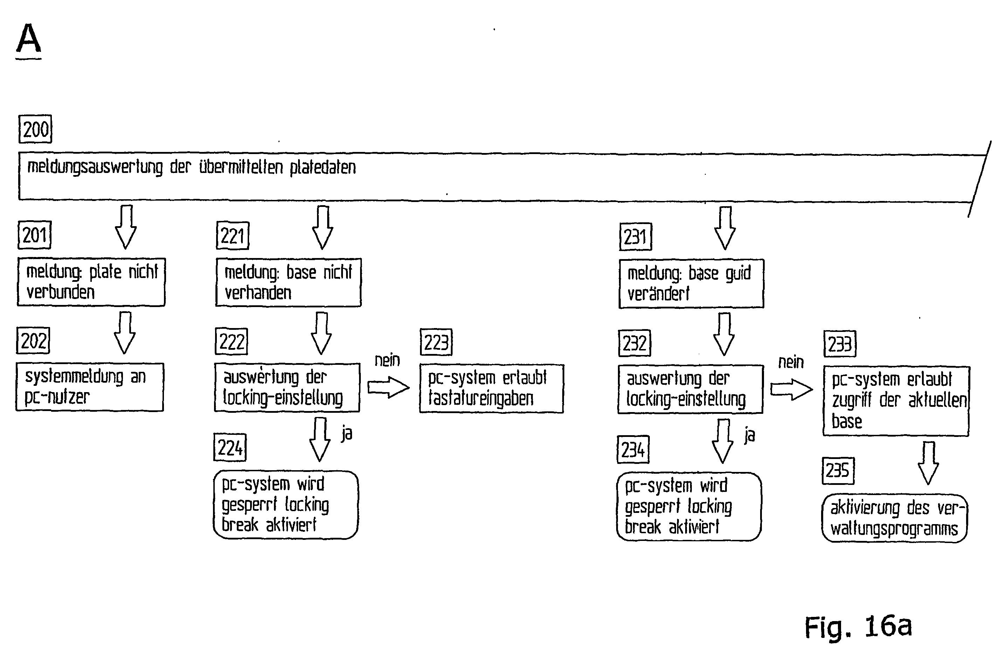

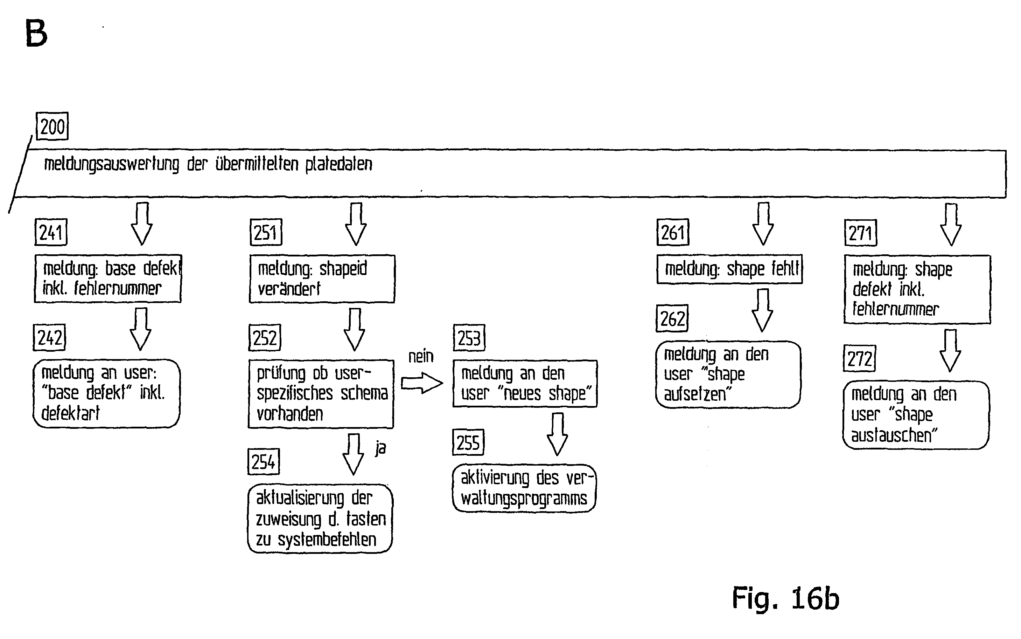

Fig. 16 stellt in Fig. 16A dar, wie der Computer zyklisch abfragt, ob ein Digitalisiertablett mit ihm verbunden ist, ob auf diesem Digitalisiertablett ein Unterteil aufliegt und welchen Global Unique Identifier dieses Unterteil besitzt. Auf diese Weise kann der Computer gesperrt werden, wenn kein Digitalisiertablett vorhanden ist, oder kein Unterteil mehr vorhanden ist oder wenn der Global Unique Identifier des Unterteils der falsche ist und keine regulärere Anmeldung, beispielsweise über die Tastatur, durchgeführt wurde.

In Fig. 16B ist die Auswertung der zyklischen Abfragen dargestellt, die dem Computer einen Fehler in dem Unterteil, eine Veränderung des Oberteils, ein Fehlen des Oberteils oder ein Defekt des Oberteils übermittelt. Auch hier kann situationsspezifisch eine Sperrung des Computers, eine Aktualisierung der Nutzungseigenschaften oder dergleichen erfolgen. Insbesondere kann wie in Schritt 254 dargestellt, die Zuweisung der Tasten zu Systembefehlen, d.h. die Menübelegung der Eingabemittel der Computermaus, aktualisiert werden, wenn das Oberteil verändert wurde und der Computer folglich dieses veränderte Oberteil feststellt, beispielsweise über ein in dem Oberteil gespeichertes und an den Computer auf Abfrage übermitteltes Kennwort ("Shape ID"). In ähnlicher Weise kann der Nutzer eine Anleitung von dem Computer erhalten, sofern der Computer feststellt, daß entweder das Oberteil fehlt oder defekt ist. In diesem Falle wird dem Nutzer in Schritt 262 mitgeteilt, ein Oberteil auf das Unterteil aufzusetzen oder in Schritt 272 mitgeteilt, das Oberteil gegen ein nicht defektes Oberteil auszutauschen.

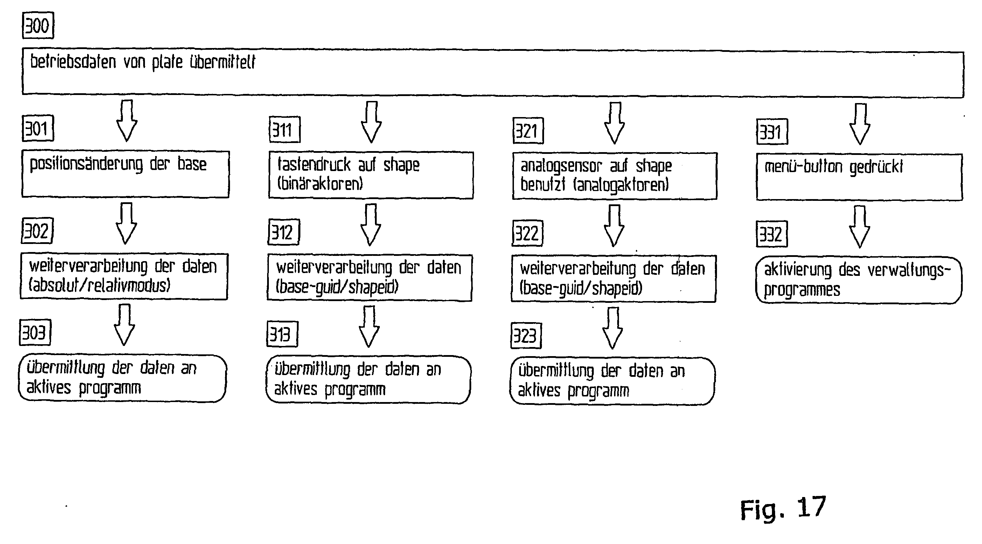

Fig. 17 zeigt die Verarbeitung von Daten, die von der Computermaus bestimmt und übermittelt werden. Diese Daten sind Positionsänderungen, die von dem Unterteil erfaßt werden oder Eingaben wie Tastendruck oder Analogeingaben, die auf dem Oberteil erzeugt werden.

Bei dem Menüknopf in Schritt 331 in Fig. 17 handelt es sich beispielsweise um den Schnellzugriffsknopf 18 gemäß Fig. 6.

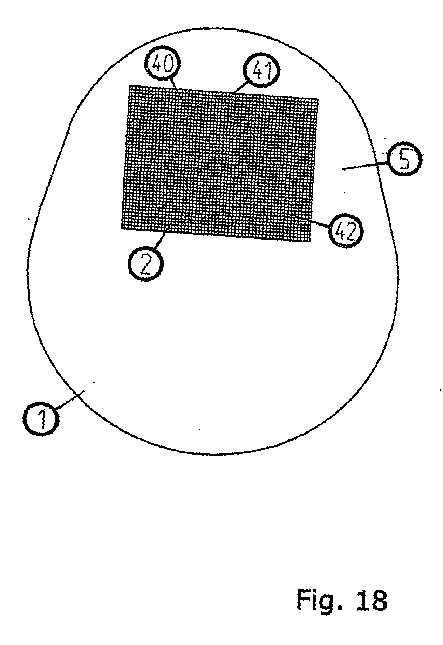

Fig. 18 zeigt ein weiteres Digitalisiertablett 1, bei dem für gleiche Elemente gleiche Bezugszeichen verwendet werden und diese daher nicht weiter erläutert werden. Dieses Digitalisiertablett 1 weist einen Zeigebereich 2 auf, der ein ferromagnetisches Gitter 40 besitzt. Ein derartiges Digitalisiertablett kann zur Positionserkennung über Spulenabtastung verwendet werden. Die flexible eingegossene Permanentmagnetgittermatte 2 liefert ein Referenzmagnetfeld im Milli-Tesla-Bereich, das über Hallsonden oder auch über eine oder mehrere Spulen im Grundkörper der Schnittstelle abgegriffen werden kann. Zur Orientierung und Positionierung in absoluter Form ist in das Magnetgitter 40 eine stärkere Referenzlinie für die X-Achse mit dem Bezugszeichen 41 sowie für die Y-Achse mit dem Bezugszeichen 42 in den Erfassungsbereich 2 eingearbeitet. Ein derartiges Digitalisiertablett 1 kann beispielsweise aus flexiblem Material bestehen und enthält selbst keine elektronischen Komponenten. Die Positionserfassung findet ausschließlich innerhalb der Schnittstelle statt.

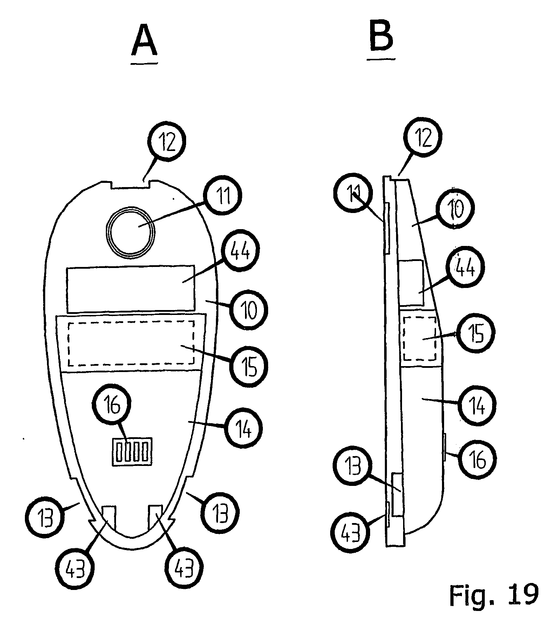

Fig. 19 zeigt eine zur Abtastung der Position auf einem Digitalisiertablett gemäß Fig. 18 geeignete Schnittstelle 19. Auch hier sind für gleiche Elemente gleiche Bezugszeichen verwendet und diese werden daher nicht nochmals beschrieben.

In Erweiterung der oben dargestellten Schnittstellen weist diese Schnittstelle eine Sende- und Empfangseinheit 44 auf, die die direkte Kommunikation mit dem Rechnersystem oder anderen Geräten übernimmt. Sie überträgt die Daten der durch die Spule 11 erfaßten Position und der Tastatur der Schnittstelle von der Elektronikeinheit 14 zu dem Rechnersystem oder den anderen Geräten. Diese können zuvor noch aufbereitet und erst dann übertragen werden. Die Sende/Empfangseinheit 44 basiert auf der Bluetooth-Technologie, mit der Geräte standardisiert Daten austauschen können.

Weiterhin weist diese Schnittstelle einen Akkumulator 15 auf, der über Buchsen 43 in dem Unterteil der Schnittstelle aufgeladen werden kann. Mittels geeignet ausgeführter Ladestation, die zugleich auch einen Ablagesteckplatz darstellen können, kann das Laden und die Übertragung der Ladeenergie an den Akkumulator 15 in Ruhepausen zwischen den Arbeitsphasen erfolgen.

Die Positionserfassung findet bei der Schnittstelle nach Fig. 15 über Spulenabtastung mittels einer Spule 11 des durch die flexible eingegossene Permanentmagnetgittermatte 40 aus Fig. 18 erzeugten Magnetfeldes statt. Mit der erfindungsgemäßen Schnittstelle kann jedoch auch ein elektrisch erzeugten Magnetfeld abgetastet werden. Damit ist es möglich, mittels der Schnittstelle die Positionserfassung durchzuführen und bereits verarbeitete Positionsdaten und Eingabedaten aus der Tastatur der Schnittstelle an einen Rechner oder ein anderes Gerät übermitteln.

Zusammenfassend läßt sich feststellen, daß durch die vorliegende Erfindung eine Schnittstelle zur Verfügung gestellt wird, die eine kostengünstige, einfache und extrem rasche Anpassung der Schnittstelle auf verschiedene Anwender und verschiedene Anwendungen ermöglicht. Weiterhin ermöglicht eine derartige Schnittstelle, diese zur Zugangskontrolle für Computer zu verwenden. Weitere Funktionalitäten dienen dem Zwischenspeichern von Daten, die so auf einfache Weise transportabel sind. Dies gilt auch für die Zusatzfunktion eines Audioplayers, der diese Schnittstelle zum multifunktionellen benutzerspezifischen Gegenstand macht.

## Patentansprüche

1. Schnittstelle zur Erzeugung von Prozess- und Koordinationseingaben mit
einem mindestens zweiteiligen Gehäuse in Form einer Computermaus aus einem Basisteil (10) und einem Oberteil (20), die lösbar miteinander verbunden sind,
einer Benutzerschnittstelle mit mindestens einem Eingabeelement (17, 23, 24) zur Erzeugung von Eingabesignalen,
gegebenenfalls einer Positionserfassungsvorrichtung (11) zur Erzeugung von Positionssignalen zur Erfassung der Position des Gehäuses, sowie
einer mit dem Eingabeelement (17, 23, 24) und gegebenenfalls der Positionserfassungsvorrichtung (11) verbundenen an oder in dem Basisteil (10) montierten Übertragungsvorrichtung (11) zur Übertragung der von dem Eingabeelement (17, 23, 24) empfangenen Eingabesignale oder der von der Positionserfassungsvorrichtung (11) empfangenen Positionssignale,
wobei die Benutzerschnittstelle an oder in dem Oberteil (20) montiert und das Eingabeelement (17, 23, 24) auf der Außenseite des Oberteiles (20) angebracht ist,
in bzw. an dem Basisteil (10) ein mit der Übertragungsvorrichtung (11) verbundenes erstes Verbindungselement (16) und in bzw. an dem Oberteil (20) ein zweites mit dem Eingabeelement (17, 23, 24) verbundenes zweites Verbindungselement (22) derart angeordnet sind,
dass die beiden Verbindungselemente (16, 22) eine elektrische, lösbare Verbindung ausbilden, wenn das Basisteil (10) und das Oberteil (20) miteinander verbunden werden, und
wobei das Basisteil (10) mit dem Oberteil (20) verrastbar ist, und
in oder an dem Oberteil (20) eine Lösevorrichtung zum Lösen der Verbindung zwischen dem Oberteil (20) und dem Basisteil (10) angeordnet ist.

2. Schnittstelle nach dem vorhergehenden Anspruch, **dadurch gekennzeichnet, daß** die Verbindungselemente Stecker (22) bzw. Buchse (16) einer elektrischen Steckverbindung sind.

3. Schnittstelle nach einem der vorhergehenden Ansprüche, **dadurch gekennzeichnet, daß** das Eingabeelement mit dem zweiten Verbindungselement über eine an oder in dem Oberteil (20) montierten elektronischen Umsetzungsvorrichtung zur Auswertung, Umsetzung und/oder Kodierung der Eingabesignale in digitale Eingabesignale verbunden ist.

4. Schnittstelle nach einem der vorhergehenden Ansprüche, **dadurch gekennzeichnet, daß** das Oberteil (20) als Eingabeelemente Tasten (17), Tastaturen, insbesondere Tastaturen mit zwei, drei oder sechzehn Tasten, Drehknöpfe, Laufräder (23), Trackballs, Sticks, 3D-Sticks (24), Rasten, Regler oder dergleichen aufweist.

5. Schnittstelle nach einem der vorhergehenden Ansprüche, **dadurch gekennzeichnet, daß** das Oberteil (20) auf seiner Außenseite ein Display (29) aufweist.

6. Schnittstelle nach einem der vorhergehenden Ansprüche, **dadurch gekennzeichnet, daß** die Übertragungsvorrichtung eine Sende- und/oder Empfangsvorrichtung (11) zum Senden und/oder Empfangen von Datensignalen aufweist.

7. Schnittstelle nach einem der vorhergehenden Ansprüche, **dadurch gekennzeichnet, daß** die Sende- und/oder Empfangsvorrichtung eine Spule (11) aufweist, mit der Signale gesandt und/oder empfangbar sind.

8. Schnittstelle nach einem der vorhergehenden Ansprüche, **dadurch gekennzeichnet, daß** die Position des Gehäuses (10, 20) mittels einer Spule (11) erfaßbar ist.

9. Schnittstelle nach dem vorhergehenden Anspruch, **dadurch gekennzeichnet, daß** die Position des Gehäuses (10, 20) mittels der Spule (11) der Sende- und/oder Empfangsvorrichtung erfaßbar ist.

10. Schnittstelle nach einem der vorhergehenden Ansprüche, **dadurch gekennzeichnet, daß** das Basisteil (10) einen Speichervorrichtung für digitale Daten und/oder eine Aufnahme (26) für eine derartige Speichervorrichtung aufweist, die mit der Übertragungsvorrichtung (11) verbunden ist.

11. Schnittstelle nach dem vorhergehenden Anspruch, **dadurch gekennzeichnet, daß** die Speichervorrichtung ein Speicherchip (RAM, ROM, EPROM) oder dergleichen ist.

12. Schnittstelle nach Anspruch 10, **dadurch gekennzeichnet, daß** die Aufnahmevorrichtung (26) ein Steckplatz, beispielsweise für eine Flashcard ist.

13. Schnittstelle nach einem der drei vorhergehenden Ansprüche, **dadurch gekennzeichnet, daß** in der Speichervorrichtung ein oder mehrere Belegungsmenüs, beispielsweise softwarespezifische Belegungsmenüs, für die Eingabeelemente der Schnittstelle, Paßwörter, Kennungen, beispielsweise Zugangskehnungen bzw. -codes, oder dergleichen speicherbar sind.

14. Schnittstelle nach einem der vier vorhergehenden Ansprüche, **dadurch gekennzeichnet, daß** in der Speichervorrichtung (26) Informationen aus einem Computer zwischenspeicherbar sind.

15. Schnittstelle nach einem der vorhergehenden Ansprüche, **dadurch gekennzeichnet, daß** das Basisteil ein Batteriefach (15), ein Akkumulatorenfach, eine Batterie, einen Akkumulator und/oder einen Batteriepuffer zur Versorgung der elektrischen Komponenten der Schnittstelle mit Strom aufweist.

16. Schnittstelle nach einem der vorhergehenden Ansprüche, **dadurch gekennzeichnet, daß** das Basisteil einen wiederbeschreibbaren Audiospeicher für Audiodateien oder eine Aufnahme (26) für einen derartigen Audiospeicher, beispielsweise einen Steckplatz für eine Flashcard (30) oder dergleichen, aufweist, der über die Eingabeelemente bedienbar ist.

17. Schnittstelle nach dem vorhergehenden Anspruch, **dadurch gekennzeichnet, daß** das Basisteil einen Anschluß (25) für Kopfhörer aufweist, der mit dem Audiospeicher (30) für Audiodateien oder der Aufnahme (26) für einen Audiospeicher derart verbunden ist, daß die in einem Audiospeicher (30) als Audiodateien gespeicherten Töne an dem Kopfhöreranschluß (25) in einer für Kopfhörerwiedergabe geeigneten Form anlegbar sind.

18. Schnittstelle nach dem vorhergehenden Anspruch, **dadurch gekennzeichnet, daß** der Speicher (30) für Audiodateien oder der Steckplatz (26) über eine Audiodaten-Auswertevorrichtung (27) mit dem Kopfhöhreranschluß (25) verbunden sind.

19. Schnittstelle nach einem der vorhergehenden Ansprüche, **dadurch gekennzeichnet, dass** die Lösevorrichtung einen Entrastmechanismus, beispielsweise einen Löseknopf, der einen Ausklinkmechanismus auslöst, aufweist.

20. Verwendung einer Vorrichtung nach einem der vorhergehenden Ansprüche zur Steuerung eines Computers.

21. Verwendung einer Vorrichtung nach einem der Ansprüche 1 bis 19 zur Eingabe von Steuerbefehlen oder Zeichen in einen Computer, zur Steuerung eines Cursors, zur Speicherung von vorbestimmten oder benutzerdefinierten Belegungsmenüs einer Software, zur Speicherung von digitalen Daten, zur Steuerung der Zugangskontrolle zu einem Computer, und/oder zum Abspielen und/oder Aufzeichnen von Audiodateien.

## Claims

1. Interface for generating process and coordination inputs, having
a casing, made in at least two parts, in the form of a computer mouse, comprising a base part (10) and a top part (20) which are joined together in such a way that they can be separated,
a user interface with at least one input element (17, 23, 24) for generating input signals,
where necessary, a position detection device (11) for generating position signals for detecting the position of the casing, and
a transmission device (11) which is connected to the input element (17, 23, 24) and, if necessary, to the position detection device (11), and which is mounted on or in the base part (10), for transmitting the input signals received from the input element (17, 23, 24) or the position signals received from the position detection device (11),
in which the user interface is mounted on or in the top part (20) and the input element (17, 23, 24) is fixed on the outside of the top part (20),
a first connecting element (16) is positioned in or on the base part (10) as appropriate and is connected to the transmission device (11), and a second connecting element (22) is positioned in or on the top part (20) as appropriate and is connected to the input element (17, 23, 24), these being positioned in such a way
that the two connecting elements (16, 22) form an electrical, separable connection when the base part (10) and the top part (20) are linked together, and
in which the base part (10) can be latched on to the top part (20), and
a release device is positioned in or on the top part (20) to disconnect the link between the top part (20) and the base part (10).

2. Interface as in the previous claim,
**characterised in that**
the connecting elements are plugs (22) or sockets (16), as appropriate, of an electrical plug connector.

3. Interface as in one of the preceding claims,
**characterised in that**
the input element is connected to the second connecting element by means of an electronic conversion device mounted on or in the top part (20) for the evaluation, conversion and/or encoding of the input signals into digital input signals.

4. Interface as in one of the preceding claims,
**characterised in that**
the top part (20) has, as input elements, keys (17), keypads, in particular keypads with two, three or sixteen keys, rotary knobs, wheels (23), trackballs, sticks, 3-D sticks (24), detents, controllers or similar.

5. Interface as in one of the preceding claims,
**characterised in that**
the top part (20) has a display (29) on the outside.

6. Interface as in one of the preceding claims,
**characterised in that**
the transmission device has a transmitting and/or receiving device (11) for sending and/or receiving data signals.

7. Interface as in one of the preceding claims,
**characterised in that**
the transmitting and/or receiving device has a coil (11) by means of which signals can be sent and/or received.

8. Interface as in one of the preceding claims,
**characterised in that**
the position of the casing (10, 20) can be detected by means of a coil (11).

9. Interface as in the previous claim,
**characterised in that**
the position of the casing (10, 20) can be detected by means of the coil (11) of the transmitting and/or receiving device.

10. Interface as in one of the preceding claims,
**characterised in that**
the base part (10) has a memory device for digital data and/or a holder (26) for a memory device of this type which is connected to the transmission device (11).

11. Interface as in the previous claim,
**characterised in that**
the memory device is a memory chip (RAM, ROM, EPROM) or similar.

12. Interface as in Claim 10,
**characterised in that**
the holder (26) is a slot, for example for a flashcard.

13. Interface as in one of the three previous claims,
**characterised in that**
one or more allocation menus, for example software-specific allocation menus for the input elements of the interface, passwords, IDs such as access IDs or codes, or similar, can be stored in the memory device.

14. Interface as in one of the four previous claims,
**characterised in that**
information from a computer can be buffered in the memory device (26).

15. Interface as in one of the preceding claims,
**characterised in that**
the base part has a battery compartment (15), an accumulator compartment, a battery, an accumulator and/or a battery buffer for the purpose of supplying power to the electrical components of the interface.

16. Interface as in one of the preceding claims,
**characterised in that**
the base part has a rewriteable audio memory for audio files or a holder (26) for an audio memory of this type, for example a slot for a flashcard (30) or similar, which can be operated by means of the input elements.

17. Interface as in the previous claim,
**characterised in that**
the base part has a port (25) for headphones which is connected to the audio memory (30) for audio files or to the holder (26) for an audio memory in such a way that the sounds stored in an audio memory in the form of audio files can be inputted to the headphones port (25) in a form that is suitable for being played back through headphones.

18. Interface as in one of the preceding claims,
**characterised in that**
the memory (30) for audio files or the slot (26) are connected to the headphone port (25) via an audio data evaluation circuit (27).

19. Interface as in one of the preceding claims,
**characterised in that**
the release device has an unlatching mechanism such as a release knob which disengages a release mechanism.

20. Use of a device as in one of the preceding claims for controlling a computer.

21. Use of a device as in one of claims 1 to 19 for inputting control commands or characters into a computer, for controlling a cursor, for storing predetermined or user-defined allocation menus of a software, for storing digital data, for controlling the access control to a computer, and/or for playing and/or recording audio files.

## Revendications

1. Interface pour générer des entrées de processus et de coordination avec
un boîtier au moins bipartite ayant la forme d'une souris d'ordinateur composée d'une partie de base (10) et d'une partie supérieure (20) qui sont reliées entre elles de façon amovible,
une interface utilisateur avec au moins un élément d'entrée (17, 23, 24) pour générer des signaux d'entrée,
éventuellement un dispositif d'enregistrement de position (11) pour générer des signaux de position en vue de l'enregistrement de la position du boîtier, ainsi qu'un
dispositif de transmission (11) monté sur ou dans la partie de base (10) et relié à l'élément d'entrée (17, 23, 24) et éventuellement au dispositif d'enregistrement de position (11) en vue de la transmission des signaux d'entrée reçus par l'élément d'entrée (17, 23, 24) ou des signaux de position reçus par le dispositif d'enregistrement de position (11),
l'interface utilisateur étant montée sur ou dans la partie supérieure (20), et l'élément d'entrée (17, 23, 24) étant placé sur la face externe de la partie supérieure (20),
un premier élément de connexion (16) relié au dispositif de transmission (11) étant disposé dans et/ou sur la partie de base (10), et un second élément de connexion (22) relié à l'élément d'entrée (17, 23, 24) étant disposé dans et/ou sur la partie supérieure (20), de telle sorte que
les deux éléments de connexion (16, 22) forment une connexion électrique amovible, lorsque la partie de base (10) et la partie supérieure (20) sont reliées l'une à l'autre, et
dans lequel la partie de base (10) est encliquetée avec la partie supérieure (20), et
un dispositif de dégagement étant disposé sur la partie supérieure (20) afin de libérer la connexion entre la partie supérieure (20) et la partie de base (10).

2. Interface selon la revendication précédente, **caractérisée en ce que** les éléments de connexion tels qu'une prise mâle (22) et/ou une douille (16) constituent une fiche de connexion électrique.

3. Interface selon une des revendications précédentes, **caractérisée en ce que** l'élément d'entrée est relié au second élément de connexion via un dispositif de conversion électronique monté sur ou dans la partie supérieure (20) à dés fins d'évaluation, de conversion et/ou de codage des signaux d'entrée dans les signaux d'entrée numériques.

4. Interface selon une des revendications précédentes, **caractérisée en ce que** la partie supérieure (20) comprend en tant qu'éléments d'entrée des touches (17), des claviers, en particulier des claviers à deux, trois ou seize touches, des boutons rotatifs, des roues mobiles (23), des boules roulantes, des manettes, des manettes 3D (24), des encliquetages, des régulateurs ou analogues.

5. Interface selon une des revendications précédentes, **caractérisée en ce que** la partie supérieure (20) comprend un affichage (29) sur sa face externe.

6. Interface selon une des revendications précédentes, **caractérisée en ce que** le dispositif de transmission comprend un dispositif d'émission et/ou de réception (11) pour l'émission et/ou la réception de signaux de données.

7. Interface selon une des revendications précédentes, **caractérisée en ce que** le dispositif d'émission et/ou de réception comprend une bobine (11) qui permet d'émettre et/ou de recevoir des signaux.

8. Interface selon une des revendications précédentes, **caractérisée en ce que** la position du boîtier (10, 20) peut être enregistrée au moyen d'une bobine (11).

9. Interface selon la revendication précédente, **caractérisée en ce que** la position du boîtier (10, 20) peut être enregistrée au moyen de la bobine (11) du dispositif d'émission et/ou de réception.

10. Interface selon une des revendications précédentes, **caractérisée en ce que** la partie de base (10) comprend un dispositif de stockage pour les données numériques et/ou un logement (26) pour un dispositif de stockage de ce type qui est relié au dispositif de transmission (11).

11. Interface selon la revendication précédente, **caractérisée en ce que** le dispositif de stockage est une puce de mémoire (RAM, ROM, EPROM) ou analogue.

12. Interface selon la revendication 10, **caractérisée en ce que** le dispositif d'enregistrement (26) est un emplacement enfichable, par exemple pour une carte Flash.

13. Interface selon une des trois revendications précédentes, **caractérisée en ce que** un ou plusieurs menus d'occupation, par exemple des menus d'occupation spécifiques de logiciel, peuvent être stockés dans le dispositif de stockage pour les éléments d'entrée de l'interface, les mots de passe, les indicatifs d'identification, par exemple les indicatifs et/ou codes d'accès, ou analogues.

14. Interface selon une des quatre revendications précédentes, **caractérisée en ce que** des informations extraites de l'ordinateur peuvent être stockées temporairement dans le dispositif de stockage (26).

15. Interface selon une des revendications précédentes, **caractérisée en ce que** la partie de base comprend un compartiment batterie (15), un compartiment accumulateurs, une batterie, un accumulateur et/ou un tampon de batterie pour l'alimentation en courant des composants électriques de l'interface.

16. Interface selon une des revendications précédentes, **caractérisée en ce que** la partie de base comprend une mémoire audio réinscriptible pour les fichiers audio ou un logement (26) destiné à une mémoire audio de ce type, par exemple un emplacement enfichable pour une carte Flash (30) ou analogue, qui peut être commandé via les éléments d'entrée.

17. Interface selon la revendication précédente, **caractérisée en ce que** la partie de base comprend un raccord (25) pour casque qui est relié à la mémoire audio (30) pour des fichiers audio ou au logement (26) pour une mémoire audio, de sorte que les sons stockés dans une mémoire audio (30) sous la forme de fichiers audio peuvent être appliqués contre le raccord de casque (25) dans une forme adaptée à la reproduction du son dans le casque.

18. Interface selon la revendication précédente, **caractérisée en ce que** la mémoire (30) pour les fichiers audio ou l'emplacement d'enfichage (26) est relié via un dispositif d'évaluation des données audio (27) au raccord de casque (25).

19. Interface selon une des revendications précédentes, **caractérisée en ce que** le dispositif de dégagement comprend un mécanisme de déverrouillage, par exemple une tête de dégagement, qui déclenche un mécanisme à déclic.

20. Utilisation d'un dispositif selon une des revendications précédentes pour la commande d'un ordinateur.

21. Utilisation d'un dispositif selon une des revendications 1 à 19 pour l'entrée d'instructions de contrôle ou de caractères dans un ordinateur, pour la commande d'un curseur, pour le stockage de menus d'occupation, prédéfinis ou définis par l'utilisateur, d'un logiciel, pour le stockage de données numériques, pour la commande des contrôle d'accès à un ordinateur, et/ou pour le défilement et/ou l'enregistrement de fichiers audio.
